# EUROPÄISCHE PATENTSCHRIFT

(11) **EP 1 506 833 B1**
(45) Veröffentlichungstag und Bekanntmachung des Hinweises auf die Patenterteilung: **20.01.2010**
(21) Anmeldenummer: 03018178.8
(22) Anmeldetag: 09.08.2003
(51) Int. Cl.: B23K 26/14, B23K 26/42

(54) **Laserbearbeitungsdüsenkupplung**
Laser nozzle coupling
Connection de buse laser

(43) Veröffentlichungstag der Anmeldung: 16.02.2005
(73) Patentinhaber: TRUMPF Werkzeugmaschinen GmbH + Co. KG, 71254 Ditzingen (DE)
(72) Erfinder: Lambert, Martin, Dr., 70736 Fellbach (DE); Herwerth, Philipp, 70839 Gerlingen (DE)
(74) Vertreter: Kohler Schmid Möbus

(56) Entgegenhaltungen:
- EP-A- 0 411 535
- EP-A- 0 548 404
- EP-A- 1 215 018
- GB-A- 2 299 777
- US-A- 3 247 978
- US-A- 4 549 846
- US-B1- 6 398 279

## Beschreibung

Die Erfindung betrifft eine Laserbearbeitungsvorrichtung mit einem Laserbearbeitungskopf, einer Laserbearbeitungsdüse und einer Laserberbeitungsdüsenkupplung zur Verbindung der Laserbearbeitungsdüse mit dem Laserbearbeitungskopf.

Das Wechseln von Laserbearbeitungsdüsen an einem Laserbearbeitungskopf einer Laserbearbeitungsmaschine, beispielsweise an einem Laserschweißkopf oder an einem Laserschneidkopf, stellt eine sich wiederholende Tätigkeit dar.

Bei einer Laserschneidanlage für ebene Werkstücke wie Bleche kommt dem Laserschneidkopf und somit auch der Schneiddüse eine besondere Bedeutung zu. Um ein optimales Schneidergebnis bei verschiedenen Materialdicken (Blechdicken) zu erreichen, müssen unterschiedliche Düsen verwendet werden. Bei den bisherigen Laserschneidanlagen können zwar durch die automatische Beladeeinrichtungen Bleche unterschiedlicher Dicke auf eine Werkstückauflage der Laserbearbeitungsmaschine zur Bearbeitung gelegt werden, aber ein automatischer Wechsel der Schneiddüse findet bisher im Allgemeinen noch nicht statt. Ein automatisierter Schneiddüsenwechsel ist aber wünschenswert. Die Vorstufe für einen vollautomatisierten Düsenwechsel ist es, die Verbindung zwischen Schneiddüse und Laserschneidkopf zu optimieren.

Allgemein bekannt ist es, Laserbearbeitungsdüsen in einen Laserbearbeitungskopf einzuschrauben. Rotationsbewegungen führen aber zu einem höheren Aufwand, welcher eine Automatisierung erschwert.

Das Wechseln von Komponenten an einem Laserbearbeitungskopf ist an sich bekannt. Durch die DE 100 56 330 C1 ist eine Wechseleinrichtung für einen Linsenhalter eines Anschlusskopfes zur Laserbearbeitung eines Werkstücks bekannt geworden. In der GB-A-2 299 777 ist eine Wechseleinrichtung zur Verbindung einer Laserbearbeitungsdüse mit einem Laserbearbeitungskopf beschrieben.

Der Anmelder hat sich die Aufgabe gestellt, eine einfache und sichere Basis für einen automatisierbaren Laserbearbeitungsdüsenwechsel bereit zu stellen.

Die Lösung der Aufgabe besteht nun gemäß Anspruch 1 darin, eine Linearbewegung einer Laserbearbeitungsdüse und eines Schiebestücks zum Lösen und Schließen (verriegeln) der Laserbearbeitungsdüsenkupplung zu nutzen. Die Erfindung führt zu einem selbstschließenden Mechanismus zur Fixierung der Laserbearbeitungsdüse im Laserbearbeitungskopf. Die zum Düsenwechsel erforderlichen Linearbewegungen können automatisiert und von der Laserbearbeitungsmaschine durchgeführt werden. Die Linearbewegung kann in Richtung der Z-Achse vertikal oder auch in Richtung der X- bzw. Y-Achse horizontal bezüglich der Bewegung des Laserbearbeitungskopfs erfolgen.

Für eine Automatisierung des Laserbearbeitungsdüsenwechsels wird keine Rotationsbewegung benötigt, denn die Kupplung kann durch einen einfachen linearen Bewegungsablauf, der nur in einer Achsrichtung abläuft, geöffnet und auch geschlossen werden.

Zur konkreten Umsetzung des Öffnen und Schließens mit zwei Linearbewegungen, nämlich der Laserbearbeitungsdüse und des Schiebestücks, werden diese Bewegungen mit der radialen Bewegung einer Kugel kombiniert. Hierzu weist eine Hülse mindestens eine Bohrung zur Aufnahme einer in radialer Richtung verschiebbaren Kugel auf, wobei die mindestens eine Kugel im geschlossenen Zustand der Laserbearbeitungskupplung in der Bohrung durch die in Kupplungsbetätigungsrichtung in der Hülse verschiebbare Laserbearbeitungsdüse nach innen und durch das ebenfalls in Kupplungsbetätigungsrichtung auf der Hülse verschiebbare Schiebestück nach außen sicherbar und fixierbar ist, wobei im geschlossenen Zustand eine Verschiebung des Schiebestücks in Kupplungsbetätigungsrichtung durch die mindestens eine Kugel unterbunden ist, die im geschlossenen Zustand zwischen einem umlaufenden ersten Absatz und einer Schrägfläche zur Anlage der Kugel an der Laserbearbeitungsdüse und einem zweiten umlaufenden Absatz des Schiebestücks eingeklemmt ist, und wobei die Laserbearbeitungsdüse aus dem geschlossenen Zustand in Kupplungsbetätigungsrichtung verschiebbar ist, um die Verschiebung des Schiebestücks in Kupplungsbetätigungsrichtung durch eine radiale Bewegung der mindestens einen Kugel nach innen zu ermöglichen. Die Kupplungsbetätigungsrichtung bezeichnet die Bewegungsrichtung zum Lösen oder Verriegeln der Kupplung und kann durch die Z, X oder Y-Richtung ausgebildet sein.

Eine Arretierung der Kugeln gegen ein unbeabsichtigtes Lösen der Kupplung wird erreicht, wenn die Laserbearbeitungsdüse mittels eines Federelements wie beispielsweise einer Balgfeder in Richtung einer Austrittsöffnung des Laserstrahls kraftbeaufschlagt und das Schiebestück mittels einer Druckfeder in Richtung der Austrittsöffnung kraftbeaufschlagt ist, wobei die Laserbearbeitungsdüse und das Schiebestück Freiräume zum Lösen der Laserbearbeitungskupplung aufweisen. Die Balgfeder übernimmt auch die Funktion einer hermetischen Abdichtung.

Das Herausfallen der Kugeln aus den Bohrungen der Hülse bei entfernter Laserbearbeitungsdüse wird durch einen Bund an der Bohrung verhindert.

Über der Laserbearbeitungsdüse - in Kupplungsbetätigungsrichtung oder Bewegungsrichtung der Schiebehülse gesehen - ist eine Schiebehülse angeordnet, über welche das Federelement auf die Laserbearbeitungsdüse wirkt. Bei entnommener Laserbearbeitungsdüse hält die Schiebehülse die Kugel in der radialen Position und übernimmt die Funktion der Laserbearbeitungsdüse. Dabei ist die Druckfeder vorgespannt. Gleichzeitig kann sich das Schiebestück durch die Position und Arretierung der Kugel nicht nach unten bewegen.

Zur erleichterten Betätigung, auch im Hinblick auf eine Automatisierung, ist es vorteilhaft, dass das Schiebestück eine Angriffsfläche für ein Hilfsmittel zum Verschieben des Schiebestücks aufweist. Mit einer rein mechanischen Betätigungsvorrichtung, die keine Hilfsenergie verwendet, könnte ein Laserbearbeitungsdüsenwechsel vorgenommen werden, da die Achse des Laserbearbeitungskopfes die erforderlichen Bewegungen ausführen kann.

Zwei Ausführungsbeispiele der Erfindung sind in der Zeichnung schematisch dargestellt und werden nachfolgend mit Bezug zu den Figuren der Zeichnung näher erläutert. Es zeigt:
- **Fig. 1**: einen Längsschnitt einer geschlossenen ersten Laserbearbeitungsdüsenkupplung eines Laserbearbeitungskopfes mit aufgenommener Laserbearbeitungsdüse;
- **Fig. 2 bis 4**: vergrößerte Details während des Öffnens der ersten Laserbearbeitungsdüsenkupplung;

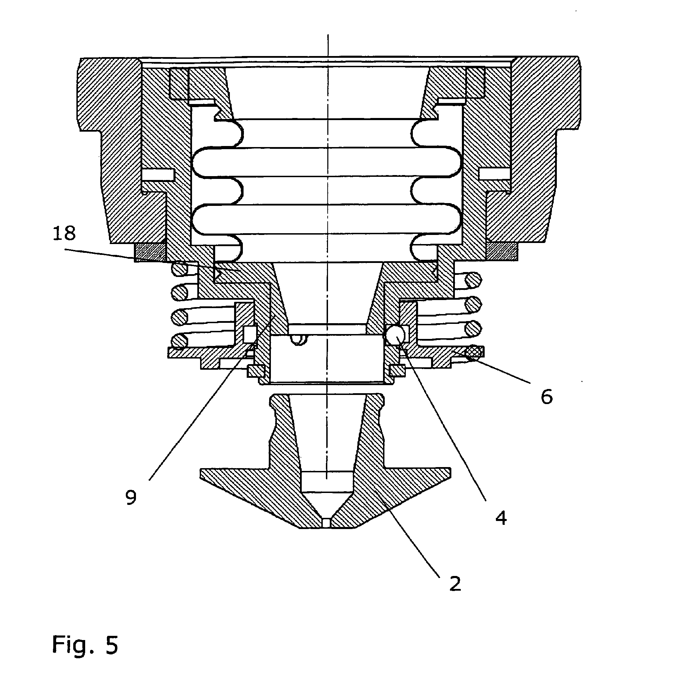

- **Fig. 5**: einen Längsschnitt der geöffneten ersten Laserbearbeitungsdüsenkupplung des Laserbearbeitungskopfes mit gelöster Laserbearbeitungsdüse.
- **Fig. 6**: einen Längsschnitt einer geschlossenen zweiten Laserbearbeitungsdüsenkupplung eines Laserbearbeitungskopfes mit aufgenommener Laserbearbeitungsdüse;

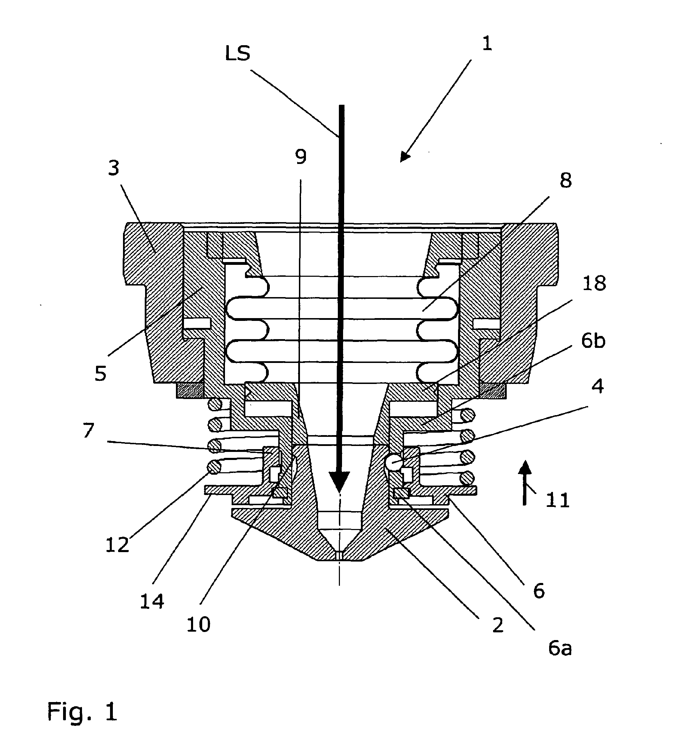

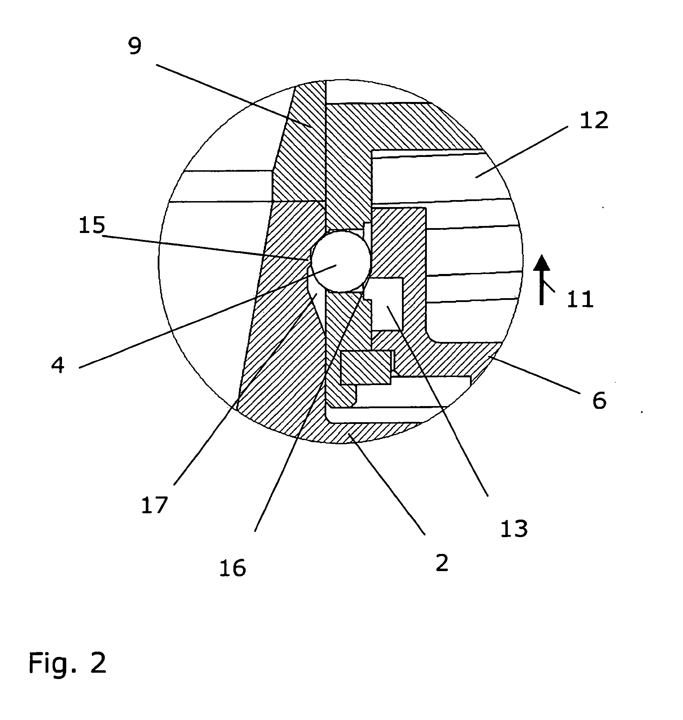

Aus der **Fig. 1** ist der Aufbau einer mit Ausnahme der Kugelanordnungen rotationssymmetrisch ausgeführten Laserbearbeitungsdüsenkupplung **1** ersichtlich. Eine reversibel verbindbare Laserbearbeitungsdüse **2** mit einer Düsenöffnung für einen Laserstrahl **LS** befindet sich im geschlossenen Zustand der Laserbearbeitungsdüsenkupplung 1 in einer eingerasteten, fixierten Lage, welche über einen Formschluss durch entsprechende im Folgenden näher erläuterte Funktionsflächen und Bauteile erreicht wird. Die Komponenten der Laserbearbeitungsdüsenkupplung1 sind mit einem zugehörigen Halter **3** verbunden, über den die Laserbearbeitungsdüsenkupplung1 mit weiteren Teilen des Laserbearbeitungskopfes verbunden ist. Die Laserbearbeitungsdüse 2 wird durch mehrere am Umfang angebrachte Kugeln **4,** vorzugsweise drei im Abstand von 120° mit einem Kugeldurchmesser von ca. 2 mm, formschlüssig gehalten. Auf Grund der Verteilung der Kugeln 4 ist in der Fig. 1 lediglich eine der Kugeln 4 sichtbar. In Bohrungen einer Hülse **5** werden die Kugeln 4 in radialer Richtung beweglich gelagert. Ein Schiebestück **6** begrenzt die radiale Bewegung der Kugeln 4 nach außen, weil ein Abschnitt **7** an den Kugeln 4 anliegt. Das Schiebestück 6 ist zwischen einem Anschlag (in einer Nut angeordneter Sprengring **6a**) und einem Anschlag **6b** verschiebbar angeordnet. Das Schiebestück 6 kann als wesentliches Betätigungselement der Laserbearbeitungsdüsenkupplung 1 betrachtet werden, welches bei einer Automatisierung des Düsenwechsels gegriffen oder betätigt werden muss. Die Laserbearbeitungsdüse 2 begrenzt die radiale Bewegung der Kugeln 4 nach innen. Über eine Balgfeder **8** aus Metall wird eine Schiebehülse **9** nach unten gedrückt. Die Balgfeder 8 besitzt die Aufgabe, die Schiebehülse 9 nach unten zu drücken, wenn keine Laserbearbeitungsdüse 2 eingesetzt ist. Außerdem verhindert die Federkraft, dass die Laserbearbeitungsdüse 2 durch leichte Kollisionen aus ihrer definierten Lage nach oben bewegt wird. Über eine umlaufende Fase **10** an der Laserbearbeitungsdüse 2 werden nun die Kugeln 4 gegen das Schiebestück 6 gedrückt. Radial wird die Laserbearbeitungsdüse 2 somit in ihrer Lage durch die Hülse 5 und axial durch die Kugeln 4 festgelegt. Durch ein geeignetes Zusammenspiel von Schiebestück 6 und Schiebehülse 9 muss zum Einwechseln der Laserbearbeitungsdüse 2 keine Hilfsbewegung durchgeführt werden. Die Laserbearbeitungsdüsenkupplung schnappt regelrecht zu (siehe Fign. 2 bis 4).

Aus der Abfolge der Fign. 2 bis 4 ist beispielhaft das Lösen der Laserbearbeitungsdüsenkupplung 1 ersichtlich. Eine entgegengesetzte Abfolge des Schließens ist anhand dieser Abfolge leicht vorstellbar.

Zum Lösen der Laserbearbeitungsdüsenkupplung 1 müssen die Kugeln 4 radial nach außen geschoben werden. Dies wird ermöglicht, indem das Schiebestück 6 in Kupplungsbetätigungsrichtung **11** (Z-Richtung) gegen die Federkraft einer Druckfeder **12** (siehe Fig. 1) nach oben geschoben wird, wodurch die Kugeln 4 in einen Ringraum **13** ausweichen können. Die Druckfeder 12 besitzt die Aufgabe, das Schiebestück 6 in einer definierten Position zu halten, so dass es nicht durch leichte Bewegungen an dem Schiebestück 6 zu einem Öffnen der Laserbearbeitungsdüsenkupplung 1 kommt. Die Betätigung des Schiebestückes 6 erfolgt durch einen manuellen Kraftangriff oder durch eine entsprechende Vorrichtung bzw. entsprechende Hilfsmittel, wie beispielsweise ein auf den druckbeaufschlagbaren Rand **14** (siehe Fig. 1) aufsetzbarer Ring. In der in **Fig. 2** dargestellten Lage kann das Schiebestück 6 allerdings noch nicht nach oben geschoben werden. Die Kugel ist zwischen einem umlaufenden ersten Absatz **15** und einer Schrägfläche zur Anlage der Kugel 4 an der Laserbearbeitungsdüse 2 und einem zweiten umlaufenden Absatz **16** des Schiebestücks 6 eingeklemmt. Die Bewegung des Schiebestücks 6 nach oben wird durch die Kugeln 4 unterbunden, weil der Absatz 16 nicht an der Kugel 4 vorbeikommt. Hierzu muss zuerst eine Bewegung der Laserbearbeitungsdüse 2 vorausgehen. Der Absatz 16 sichert die Laserbearbeitungsdüse 2 gegen ein unbeabsichtigtes Herausfallen, wenn das Schiebestück 6 aus Versehen nach oben gedrückt wird. Die Kugeln 4 sind eingeklemmt. Ein unbeabsichtigtes Lösen der Laserbearbeitungsdüsenkupplung 1 ist somit unterbunden.

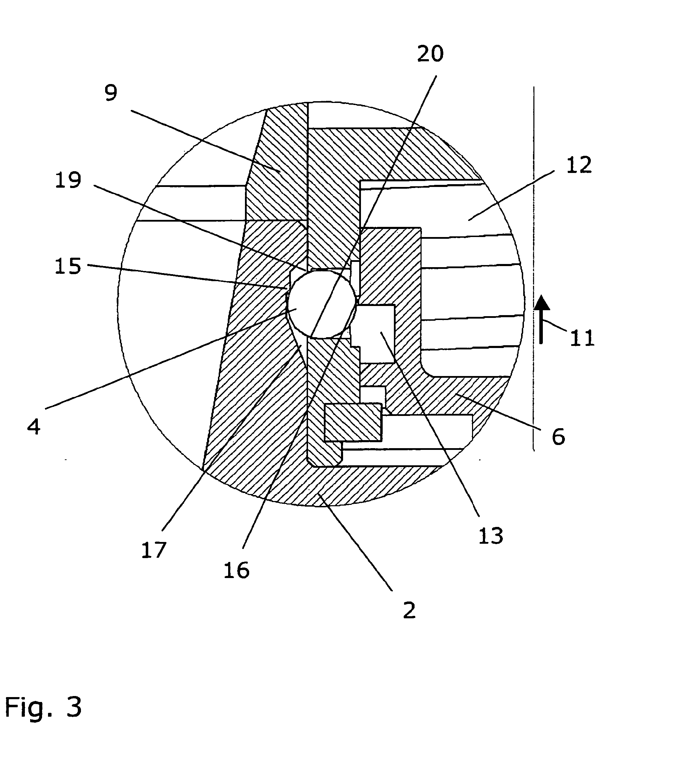

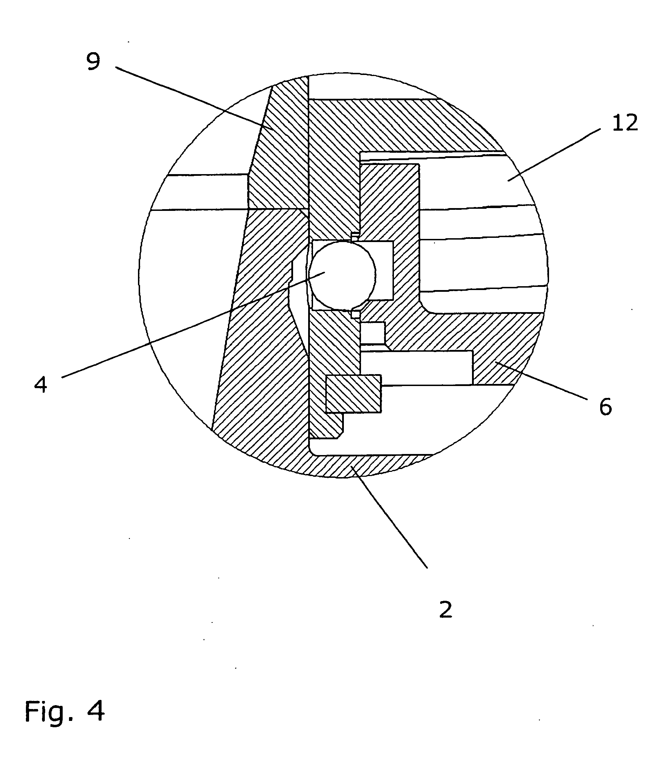

Zum Lösen ist zuerst die Laserbearbeitungsdüse 2 nach oben zu schieben, wie in **Fig. 3** dargestellt. Ein Herausfallen der Kugel 4 aus der Bohrung wird durch einen Bund **19** und **20** verhindert, wenn die Laserbearbeitungsdüse 2 entfernt wurde. Die Kugel 4 kann nur bis zu dem Bund 19, 20 in radialer Richtung nach innen bewegt werden. Die Kugel 4 kann in den innenseitig frei werdenden Raum **17** ausweichen, wodurch das Schiebestück 6 (siehe auch **Fig. 4**) nach oben geschoben werden kann, weil es nun an der Kugel 4 vorbei bewegt werden kann. Die Kugel 4 kann anschließend nun in radialer Richtung in den Ringraum 13 ausweichen. Nur durch die Kombination der Bewegungen lässt sich die Laserbearbeitungsdüsenkupplung 1 lösen, weil sich die Kugeln 4 radial nach innen bzw. nach außen schieben lassen.

Die Balgfeder 8 drückt über die Schiebehülse 9 auf die Laserbearbeitungsdüse 2. Die Schiebehülse 9 drückt die Laserbearbeitungsdüse 2 nach unten. Die Bewegung der Schiebehülse 9 wird durch einen Bund **18** (vgl. Fig. 1 und Fig. 4) begrenzt. In dieser Lage hält nun die Schiebehülse 9 die Kugeln radial nach außen geschoben fest, wodurch das Schiebestück 6 durch die Kugeln 4 arretiert wird. Die Druckfeder 12 bleibt somit gespannt, auch wenn der äußere Kraftangriff zum Betätigen am Schiebestück 6 entfällt. Mit der so gespannten Laserbearbeitungsdüsenkupplung 1 kann eine weitere Laserbearbeitungsdüse 2 ohne äußere Betätigung durch axiales Einschieben fixiert werden: Die Laserbearbeitungsdüse 2 drückt zuerst auf die Schiebehülse 9, schiebt diese nach oben, und die Kugeln 4 können in die Verjüngung an der Laserbearbeitungsdüse 2 ausweichen. Hierdurch wird das Schiebestück 6 axial nicht mehr gestützt und springt durch die Federvorspannung in die in Fig. 1 dargestellte Lage. Die Laserbearbeitungsdüse 2 ist fixiert.

Die Aufnahme der Laserbearbeitungsdüse 2 und das Schließen der Laserbearbeitungsdüsenkupplung1 erfolgt analog in umgekehrter Reihenfolge zum oben beschriebenen Lösen der Laserbearbeitungsdüsenkupplung 1.

Durch die Vorspannung der Laserbearbeitungsdüsenkupplung 1 kann eine neue Laserbearbeitungsdüse sehr schnell eingewechselt werden. Dies liegt an dem Schiebestück 6, welches noch von der Kugel 4 in der oberen Position gehalten wird. Die Druckfeder 12 ist an der Vorspannung der Kupplung 1 analog zur Balgfeder 8 beteiligt. Bei entnommener Laserbearbeitungsdüse 2 hält die Schiebehülse 9 die Kugel 4 in der radialen Position und übernimmt die Funktion der Laserbearbeitungsdüse 2. Dabei ist die Druckfeder 12 vorgespannt. Gleichzeitig kann sich das Schiebestück 6 durch die Position und Arretierung der Kugel 4 nicht nach unten bewegen. Die Kupplung 1 kann daher bei der nächsten Aufnahme einer Laserbearbeitungsdüse 2 automatisch ohne Fremdeinwirkung zuschnappen. Wird eine Laserbearbeitungsdüse 2 nun von unten eingeschoben, drückt sie erst die Schiebehülse 9 entgegen der Federkraft nach oben. Das Schiebestück 6 ist bei diesem Vorgang völlig unbeteiligt. Die Laserbearbeitungsdüse 2 drückt nun so weit, bis sich der kleinste Düsendurchmesser auf Kugelhöhe befindet. Dadurch können sich die Kugeln 4 in Richtung der Strahlachse, also zur Mitte, hin bewegen. Wenn sich die Kugeln 4 in diese Richtung bewegen, ermöglichen sie dem Schiebestück 6, welches bisher wegen seines Absatzes 16 nicht bewegt werden konnte, die Bewegung nach unten. Diese Bewegung nach unten wird durch die Federkraft der Druckfeder 12 unterstützt. Die Druckfeder 12 drückt das Schiebestück 6 wieder auf den Anschlag. Dadurch ist die Laserbearbeitungsdüse 2 fixiert, und zum Einwechseln der Laserbearbeitungsdüse 2 musste kein Bauteil mit fremder Hilfe bewegt werden.

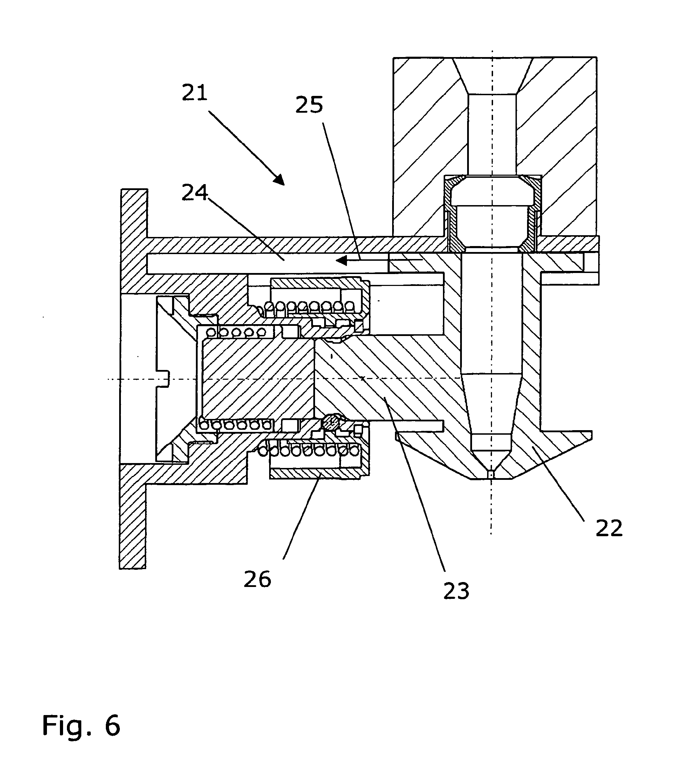

Während das erste Ausführungsbeispiel eine Bewegung des Schiebestücks 6 in Z-Richtung des Laserbearbeitungskopfes zeigt, ist auch Anordnung einer zweiten Laserbearbeitungsdüsenkupplung **21** mit einer Bewegung in X- oder Y-Richtung (Kupplungsbetätigungsrichtung **25** möglich. Dies zeigt **Fig. 6**. Der Kupplungsmechanismus zum Lösen und Schließen an sich ist unverändert. Ein Schiebestück **26** und eine Laserbearbeitungsdüse **22** sind quer zum Laserstrahl verschieblich. Die Laserbearbeitungsdüse 22 weist eine gegenüber Fig. 1 geänderte Halterung an den Laserbearbeitungskopf auf und ist über einen Düsenabschnitt **23** seitlich angekuppelt. Eine Führung in einer Nut **24** ermöglicht die seitliche Bewegung.

### BEZUGSZEICHENLISTE

- 1: Laserbearbeitungskupplung
- 2: Laserbearbeitungsdüse
- 3: Halter
- 4: Kugel
- 5: Hülse
- 6: Schiebestück
- 6a: Sprengring
- 6b: Anschlag
- 7: Abschnitt
- 8: Balgfeder
- 9: Schiebehülse
- 10: Fase
- 11: Kupplungsbetätigungsrichtung
- 12: Druckfeder
- 13: Ringraum
- 14: Rand
- 15: Erster Absatz
- 16: Zweiter Absatz
- 17: Raum
- 18: Bund
- 19: Bund
- 20: Bund
- 22: Laserbearbeitungsdüse
- 23: Düsenabschnitt
- 24: Nut
- 25: Kupplungsbetätigungsrichtung
- 26: Schiebestück

## Patentansprüche

1. Laserbearbeitungsvorrichtung (1; 21) mit einem Laserbearbeitungskopf, einer Laserbearbeitungsdüse (2; 22) und einer Laserbearbeitungsdüsenkupplung (1; 21) zur Verbindung der Laserbearbeitungsdüse (2; 22) mit dem Laserbearbeitungskopf, **dadurch gekennzeichnet, daß** die Vorrichtung ein Schiebestück (6; 26) weiter umfasst, wobei die Laserbearbeitungsdüse (2; 22) und das Schiebestück (6; 26) zum Lösen und Schließen der Laserbearbeitungsdüsenkupplung (1; 21) linear verschiebbar angeordnet sind, sowie eine Hülse (5), die mindestens eine Bohrung zur Aufnahme einer in radialer Richtung verschiebbaren Kugel (4) aufweist, wobei die mindestens eine Kugel (4) im geschlossenen Zustand der Laserbearbeitungskupplung (1; 21) in der Bohrung durch die in der Hülse (5) verschiebbare Laserbearbeitungsdüse (2; 22) nach innen und durch das auf der Hülse (5) verschiebbare Schiebestück (6; 26) nach außen gesichert und fixiert ist, wobei die Kugel (4) im geschlossenen Zustand zwischen einem umlaufenden ersten Absatz (15) und einer Schrägfläche zur Anlage der Kugel (4) an der Laserbearbeitungsdüse (2, 22) und einem zweiten umlaufenden Absatz (16) des Schiebestücks (6) eingeklemmt ist, und wobei im geschlossenen Zustand eine Verschiebung des Schiebestücks (6; 26) in Kupplungsbetätigungsrichtung (11, 25) durch die mindestens eine Kugel (4) unterbunden ist, weil der Absatz (16) des Schiebestücks (6; 26) nicht an der Kugel vorbeikammt, und die Laserbearbeitungsdüse (2) aus dem geschlossenen Zustand in Kupplungsbetätigungsrichtung (11, 25) verschiebbar ist, um die Verschiebung des Schiebestücks (6; 26) in Kupplungsbetätigungsrichtung (11, 25) durch eine radiale Bewegung der mindestens einen Kugel (4) nach innen zu ermöglichen.

2. Laserbearbeitungsvorrichtung nach Anspruch 1, **dadurch gekennzeichnet, dass** die Laserbearbeitungsdüse (2; 22) mittels eines Federelements (8) in Richtung einer Austrittsöffnung des Laserstrahls (LS) kraftbeaufschlagt und dass das Schiebestück (6; 26) mittels einer Druckfeder (12) in Richtung der Austrittsöffnung kraftbeaufschlagt ist.

3. Laserbearbeitungsvorrichtung nach einem oder mehreren der vorhergehenden Ansprüche, **dadurch gekennzeichnet, dass** die Laserbearbeitungsdüse (2; 22) und das Schiebestück (6; 26) Freiräume (13, 17) zum Lösen der Laserbearbeitungsdüsenkupplung (1; 21) aufweisen.

4. Laserbearbeitungsvorrichtung nach einem oder mehreren der vorhergehenden Ansprüche, **dadurch gekennzeichnet, dass** über der Laserbearbeitungsdüse (2; 22) - in Kupplungsbetätigungsrichtung (11; 25) gesehen - eine Schiebehülse (9) angeordnet ist, über welche das Federelement (8) auf die Laserbearbeitungsdüse (2; 22) wirkt.

5. Laserbearbeitungsvorrichtung nach einem oder mehreren der vorhergehenden Ansprüche, **dadurch gekennzeichnet, dass** das Schiebestück (6; 26) eine Angriffsfläche (Rand 14) für ein Hilfsmittel zum Verschieben des Schiebestücks (6; 26) aufweist.

6. Laserbearbeitungsvorrichtung nach einem oder mehreren der vorhergehenden Ansprüche, **dadurch gekennzeichnet, dass** die Bewegungsrichtung (11) des Schiebestücks (6) und der Laserbearbeitungsdüse (2) durch die Z-Richtung der Bewegung des Laserbearbeitungskopfs, d.h. die Strahlungsrichtung des Laserstrahls, ausgebildet ist.

7. Laserbearbeitungsvorrichtung nach einem oder mehreren der Ansprüche 1 bis 5, **dadurch gekennzeichnet, dass** die Bewegungsrichtung (25) des Schiebestücks (26) und der Laserbearbeitungsdüse (22) durch die X- oder Y-Richtung der Bewegung des Laserbearbeitungskopfs, d.h. quer zum Laserstrahl, ausgebildet ist.

## Claims

1. Laser processing assembly (1; 21) comprising a laser processing head, a laser processing nozzle (2; 22) and a laser processing nozzle coupling assembly (1; 21) for connecting the laser processing nozzle (2; 22) to the laser processing head, **characterized in that** the assembly further comprises a sliding piece (6; 26), wherein the laser processing nozzle (2; 22) and the sliding piece (6; 26) are disposed to be linearly displaceable for releasing and locking the laser processing nozzle coupling assembly (1; 21), and a sleeve (5) comprising at least one bore for receiving a ball (4) displaceable in a radial direction, wherein the at least one ball (4) in a locked condition of the laser processing coupling assembly (1; 21) is secured and fixed toward the interior in the bore by means of the laser processing nozzle (2; 22) displaceable within the sleeve (5) and toward the outside by means of the sliding piece (6; 26) displaceable on the sleeve (5), wherein the ball (4) is clamped in the locked condition between a circumferential first shoulder (15) and a slanting surface for abutment of the ball (4) against the laser processing nozzle (2, 22) and a second circumferential shoulder (16) of the sliding piece (6), and wherein in the locked condition, displacement of the sliding piece (6; 26) toward the direction of the coupling actuation (11, 25) is suppressed by the at least one ball (4), since the shoulder (16) of the sliding piece (6; 26) is unable to by-pass the ball, and the laser processing nozzle (2) is displaceable from the closed condition into the direction of the coupling actuation (11, 25) to enable the displacing of the sliding piece (6; 26) toward the direction of the coupling actuation (11, 25) by a radial movement of the at least one ball (4) toward the interior.

2. Laser processing assembly according to claim 1, **characterized in that** the laser processing nozzle (2; 22) is loaded with a force by means of a spring element (8) in the direction of an outlet opening of the laser beam (LS) and that the sliding piece (6; 26) is loaded with a force by means of a compression spring (12) in the direction of the outlet opening.

3. Laser processing assembly according to any one or more of the preceding claims, **characterized in that** the laser processing nozzle (2; 22) and the sliding piece (6; 26) comprise free spaces (13, 17) for releasing the laser processing nozzle coupling assembly (1; 21).

4. Laser processing assembly according to any one or more of the preceding claims, **characterized in that** a sliding sleeve (9) is disposed over the laser processing nozzle (2; 22) - viewed in the direction of coupling actuation (11; 25) - via which the spring element (8) acts on the laser processing nozzle (2; 22).

5. Laser processing assembly according to any one or more of the preceding claims, **characterized in that** the sliding piece (6; 26) comprises a working surface (edge 14) for an auxiliary means for displacing the sliding piece (6; 26).

6. Laser processing assembly according to any one or more of the preceding claims, **characterized in that** the direction of motion (11) of the sliding piece (6) and the laser processing nozzle (2) is formed by the Z direction of the motion of the laser processing head, i.e. the direction of radiation of the laser beam.

7. Laser processing assembly according to any one or more of claims 1 through 5, **characterized in that** the direction of motion (25) of the sliding piece (26) and the laser processing nozzle (22) is formed by the X or Y direction of the motion of the laser processing head, i.e. transverse to the laser beam.

## Revendications

1. Dispositif d'usinage par laser (1 ; 21) comprenant une tête d'usinage par laser, une buse d'usinage par laser (2 ; 22) et un accouplement de buse d'usinage par laser (1 ; 21) servant à relier la buse d'usinage par laser (2 ; 22) à la tête d'usinage par laser, **caractérisé en ce que** le dispositif comprend de plus une pièce coulissante (6 ; 26), la buse d'usinage par laser (2 ; 22) et la pièce coulissante (6 ; 26) étant disposées avec possibilité de déplacement linéaire pour le desserrage et la fermeture de l'accouplement de buse d'usinage par laser (1 ; 21), ainsi qu'un manchon (5) qui présente au moins un perçage pour la réception d'une bille (4) déplaçable en direction radiale, ladite au moins une bille (4) étant, dans l'état fermé de l'accouplement de buse d'usinage par laser (1 ; 21), bloquée et fixée dans le perçage vers l'intérieur par la buse d'usinage par laser (2 ; 22) déplaçable dans le manchon (5) et vers l'extérieur par la pièce coulissante (6 ; 26) déplaçable sur le manchon (5), la bille (4) étant, dans l'état fermé, coincée entre un premier talon périphérique (15) et une surface oblique servant à l'appui de la bille (4) sur la buse d'usinage par laser (2 ; 22) et un deuxième talon périphérique (16) de la pièce coulissante (6), un déplacement de la pièce coulissante (6 ; 26) dans la direction d'actionnement d'accouplement (11, 25) étant empêché par ladite au moins une bille (4) dans l'état fermé parce que le talon (16) de la pièce coulissante (6 ; 26) ne peut pas passer devant la bille, et la buse d'usinage par laser (2) étant déplaçable depuis l'état fermé dans la direction d'actionnement d'accouplement (11, 25) pour permettre le déplacement de la pièce coulissante (6 ; 26) dans la direction d'actionnement d'accouplement (11, 25) par un mouvement radial de ladite au moins une bille (4) vers l'intérieur.

2. Dispositif d'usinage par laser selon la revendication 1, **caractérisé en ce que** la buse d'usinage par laser (2 ; 22) est soumise à une force en direction d'une ouverture de sortie du faisceau laser (LS) au moyen d'un élément élastique (8) et que la pièce coulissante (6 ; 26) est soumise à une force en direction de l'ouverture de sortie au moyen d'un ressort de compression (12).

3. Dispositif d'usinage par laser selon une ou plusieurs des revendications précédentes, **caractérisé en ce que** la buse d'usinage par laser (2 ; 22) et la pièce coulissante (6 ; 26) présentent des espaces libres (13, 17) pour le desserrage de l'accouplement de buse d'usinage par laser (1 ; 21).

4. Dispositif d'usinage par laser selon une ou plusieurs des revendications précédentes, **caractérisé en ce qu'**au-dessus de la buse d'usinage par laser (2 ; 22), vu en direction d'actionnement d'accouplement (11, 25), est disposé un manchon coulissant (9) par l'intermédiaire duquel l'élément élastique (8) agit sur la buse d'usinage par laser (2 ; 22).

5. Dispositif d'usinage par laser selon une ou plusieurs des revendications précédentes, **caractérisé en ce que** la pièce coulissante (6 ; 26) présente une surface d'attaque (bord 14) pour un moyen servant à déplacer la pièce coulissante (6 ; 26).

6. Dispositif d'usinage par laser selon une ou plusieurs des revendications précédentes, **caractérisé en ce que** la direction de déplacement (11) de la pièce coulissante (6) et de la buse d'usinage par laser (2) est formée par la direction Z de déplacement de la tête d'usinage par laser, c'est-à-dire la direction de rayonnement du faisceau laser.

7. Dispositif d'usinage par laser selon une ou plusieurs des revendications 1 à 5, **caractérisé en ce que** la direction de déplacement (25) de la pièce coulissante (26) et de la buse d'usinage par laser (22) est formée par la direction X ou Y de déplacement de la tête d'usinage par laser, c'est-à-dire la direction perpendiculaire au faisceau laser.
